# EUROPEAN PATENT APPLICATION

(11) **EP 2 757 020 A1**
(43) Date of publication of application: **23.07.2014**
(21) Application number: 12831444.0
(22) Date of filing: 08.08.2012
(51) Int. Cl.: B62B 3/02, B62K 19/46

(54) **FOLDABLE SHOPPING CART**

(30) Priority: 16.09.2011 CN 201110276010; 16.12.2011 CN 201110424348
(71) Applicant: Zhu, Kaiyi, Shanghai 200433 (CN)
(72) Inventor: Zhu, Kaiyi, Shanghai 200433 (CN)
(74) Representative: Baumgärtel, Gunnar
(86) International application number: PCT/CN2012/079822
(87) International publication number: WO 2013/037252

(57) **Abstract**

A foldable shopping cart comprises a riding seat, a shopping basket rack that can be longitudinally folded and has wheels, and a steering device. The shopping basket rack can switch between a folded position and an unfolded position longitudinally about a folding shaft. The cart further comprises a locking device for securing the shopping basket rack in the unfolded state, and at least two sets of wheels arranged longitudinally. One set of wheels are drive wheels equipped with a driving device, and the rest are support wheels. At least one set of the drive wheels and the support wheels are paired wheels transversely and symmetrically arranged. The cart in the unfolded state can be slowly pushed and also ridden fast. Therefore, secondary transportation is avoided, and the size of the cart after folding is small.

## Description

The present application claims priority to the Chinese Patent Applications as follows which are herein incorporated by reference in their entirety:
1) application No. 201110276010.4, filed with the Chinese Patent Office on September 16, 2011 and entitled "FOLDABLE SHOPPING CART"; and
2) application No. 201110424348.X, filed with the Chinese Patent Office on December 16, 2011 and entitled "PORTABLE SHOPPING CART".

### FIELD OF THE INVENTION

The application relates to a foldable shopping cart, and particularly relates to a foldable shopping cart applicable to shopping in the city.

### BACKGROUND OF THE INVENTION

With the increasingly fine division of labor in modem urban families, there are full-time housewives or nannies in many families, and one of main domestic works of these people is to purchase vegetables and food and so on. However, these people generally cannot ride a motorcycle or any other motorized vehicle, and bicycles have a limited carrying capacity. Thus, it is necessary to provide a tool which can carry more cargoes and can be easily traveled by pushing in the shopping. Moreover, with the rise of high elevator apartments, and due to insufficient supply of parking spaces for cars in large shopping places and traffic jam around the supermarkets, there is an urgent need for a shopping cart which can be applicable to a short-distance shopping and has an overall volume much smaller than that of a normal car.

The application is attempted to provide a foldable shopping cart which can satisfy the requirement of door-to-door shopping.

### SUMMARY OF THE INVENTION

A foldable shopping cart is improved in that the foldable shopping cart includes a riding seat, a longitudinally foldable shopping basket rack having wheels, and a steering device, wherein the shopping basket rack is capable of being switched between a folded position and an unfolded position longitudinally about a folding shaft; a locking device for locking the shopping basket rack in an unfolded state is further provided; at least two rows of wheels are arranged longitudinally, one row of which is a driving wheel provided with a driving device, and the rest row of which is a supporting wheel; and at least one row of the driving wheel and the supporting wheel is a wheel set arranged symmetrically.

With such improvement, the following three problems are solved. Firstly, the cart can be pushed stably and slowly since at least three wheels are on the ground during shopping in the mall, and also can be ridden stably and quickly since at least three wheels are on the transportation road; secondly, the shopping basket rack in the folded state may occupy a small volume at home; and thirdly, when entering or going out of a shopping mall or an elevator apartment, no secondary handling and reload is required, so that a parking space and the strength of the shopping people are saved; the traffic jam around big supermarkets can be alleviated; and a door-to-door shopping can be achieved with ease.

### BRIEF DESCRIPTION OF THE DRAWINGS

Figure 1 shows a perspective view and a partial detailed view of an embodiment of a foldable shopping cart of the application;
Figure 2 shows a top view and a partial detailed view of an embodiment of a foldable shopping cart of the application;
Figure 3 shows side views of two embodiments of a foldable shopping cart of the application;
Figure 4 shows side views of two embodiments of a foldable shopping cart of the application;
Figures 5 is a side view of an embodiment of a foldable shopping cart of the application;
Figures 6 is a side view of an embodiment of a foldable shopping cart of the application;
Figure 7 is a perspective view of an embodiment of a foldable shopping cart of the application;
Figure 8 shows a side view and a partial detailed view of an embodiment of a foldable shopping cart of the application;
Figure 9 is a side view of an embodiment of a foldable shopping cart of the application;
Figures 10 is a perspective view of an embodiment of a foldable shopping cart of the application;
Figure 11 is a side view of an embodiment of a foldable shopping cart of the application;
Figure 12 is a side view of an embodiment of a foldable shopping cart of the application;
Figure 13 shows schematic views of two embodiments of a quick dissembling-assembling structure on a foldable shopping cart of the application;
Figure 14 is a schematic view of a sliding-stop device on a foldable shopping cart of the application;
Figures 15 is a schematic view of a foldable cantilever driving device on a foldable shopping cart of the application;
Figure 16 is a schematic view of a separated driving device on a foldable shopping cart of the application; and
Figure 17 is a side view of an embodiment of a foldable shopping cart of the application.

### Reference Numerals in the drawings:

1 - front supporting wheel; 2 - rear driving wheel; 3 - vertical folding shaft; 4 - transverse folding shaft; 5 - vertical shaft sleeve; 6 - seat; 7 - quick assembling/disassembling structure; 8 - longitudinal rod; 9 - vertical locking rod; 10 - third row of driving wheel; 11 - third row of supporting wheel; 12 - longitudinal retractable structure; 13 - vertical locking rod abutting structure; 14 - hinge hoop; 15 - cross shaft sleeve; 16 - clamp ring, 17 - string bag, 18 - X-shaped shopping basket rack, 19 - connecting folding shaft, 20 - racquet-shaped foldable frame, 21 - foldable cantilever; 22 - X-shaped shopping basket rail; 23 - retractable sleeve; 24 - steering handle; 25 - steering control cable; 26 - pedal driving structure, 27 - separated driving structure, 28 - seat reversing structure, 29 - vertical steering rod; 30 - short-thread connector, 31 - single-hand bidirectional diverter, 32 - buffering spring, 33 - open shaft seat, 40 - fixing plane, 41 - transverse sliding direction, 42 - seat rod, 45 -driving wheel axle.

### DETAILED DESCRIPTION

Hereinafter, the application will be described in detail in conjunction with the drawings. Apparently, these embodiments are only a part of, not all of the embodiments of the application, and other embodiments obtained by those skilled in the art without creative work all belong to the scope of protection of the application.

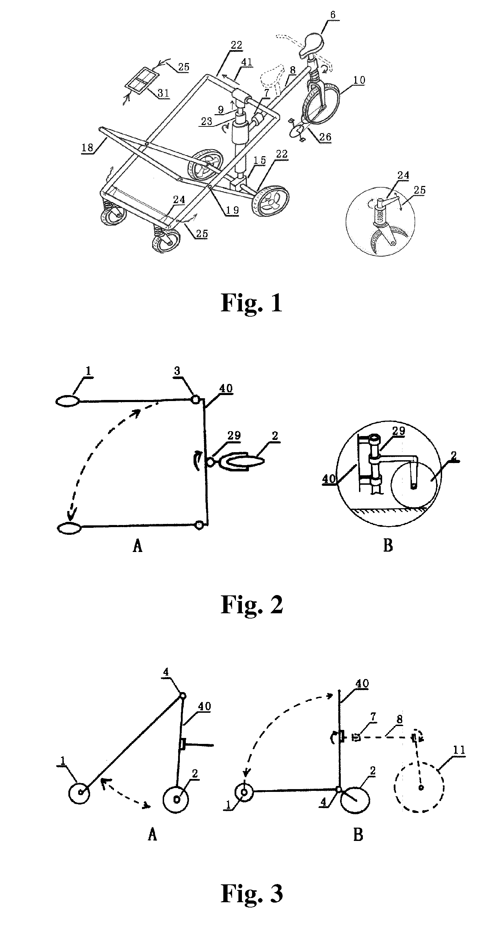

A foldable shopping cart is improved in including a riding seat 6, a longitudinally foldable shopping basket rack having wheels, and a steering device, wherein the shopping basket rack can be switched between a folded position and an unfolded position longitudinally about a folding shaft; a locking device is provided for locking the shopping basket rack in an unfolded state; at least two rows of wheels are arranged longitudinally, one row of which are driving wheels provided with a driving device, and the rest row of which are supporting wheels; and at least one of the row of the driving wheels and the row of the supporting wheels are a wheel set arranged symmetrically. Therefore, it is possible to meet the three requirements of stable state when pushing at a low speed in shopping and when riding on the road at a high speed, significant reduction of the overall volume of the cart folded up in home and no need for door-to-door secondary transportation. Typically, in Figures 1 to 12 and 17, the schematic views of carts respectively having two rows of wheels arranged longitudinally and having three rows of wheels arranged longitudinally are shown. Generally, a soft string bag 17 or a shopping basket can be used with the shopping basket rack. Alternatively, the shopping basket rack may be adapted for a modified baby carriage or handicapped seat, having adaptability in various light transport conditions. Considering that the center of gravity of the whole cart cannot beyond the longitudinal boundary wheel, the riding seat 6 is located between several rows of the wheels, and is close to and above the driving wheal. In order to prevent the driving wheel from slipping or idling, most of the weight of a rider should be transmitted to the driving wheel via a suitable bearing structure. It should be noted that in the application, terms of "front or rear" are used for the purpose of facilitating illustration of the parts shown in the drawings of the specification and are not intended to limit a traveling direction of the cart. Specifically, the left side of the drawing is front and the right side thereof is rear. In the application, the term of "row" is used only for the purpose of facilitating description, and can include two wheels arranged symmetrically or a single wheel. In a foldable shopping cart with two longitudinal rows of wheels, wherein a front row of wheels are the supporting wheels and a rear row of wheels are the driving wheels. In a foldable shopping cart with three longitudinal rows of wheels, wherein a front row of wheels are the supporting wheels, and the driving wheels can be the middle or third rows of wheels. If the driving wheels are the third row of wheels, the third row of wheels are indicated as the third row of driving wheels 10; and if the driving wheels are the middle row of wheels, the third row of wheels are indicated as the third row of supporting wheels 11, so as to avoid confusion of the driving wheel and the supporting wheel.

A preferred improvement can be further made, in which the shopping basket rack includes a rear fixing plane 40, a driving wheel 2 is located at a lower end of the fixing plane 40, vertical folding shafts 3 are respectively provided on the left side and the right side of the fixing plane 40, and the supporting wheels 1 are respectively located at front lower ends of a movable folding plane that can be foldable in a right-left direction. As shown in Figure 2A, with such improvement, a vertical quadrangular or triangular shopping basket that can be foldable along an arc line in the drawing is formed, and the separated vertical folding shafts 3 are made to come close to each other or the front ends of the two movable foldable planes are combined to form a triangular shopping basket, thereby achieving a simplest foldable structure.

A preferred improvement can be further made, in which the shopping basket rack includes a rear fixing plane 40, the driving wheel 2 is provided at a lower end of the fixing plane 40, a transverse folding shaft 4 is located on the fixing plane 40, a movable foldable plane is foldable upwards or downwards, and the supporting wheels 1 are provided at the front end of the movable foldable plane. As shown in Figures 3A and 3B, with such improvement, by folding along the arc line in the drawings, when the transverse folding shaft is located at the top of the fixing plane 40, a substantially A-shaped unfolded shopping basket rack is formed; and when the transverse folding shaft is located at the bottom of the fixing plane 40, a substantially L-shaped unfolded shopping basket rack is formed. With such improvement, a fastest speed for folding up in daily use is achieved.

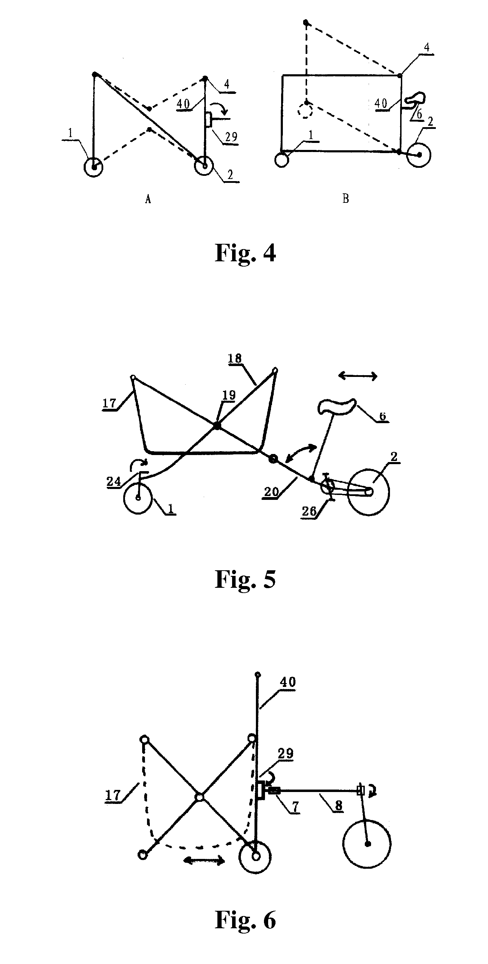

A preferred improvement can be further made, in which the shopping basket rack includes a rear fixing plane 40, the driving wheel 2 is provided at a lower end of the fixing plane, a translating movable foldable plane are folded forward or backward by means of several folding shafts in a translation manner, and a supporting wheel 1 is provided at the lower end of the movable foldable plane. As shown in Figure 4A, with such improvement, an N-shaped foldable process or an M-shaped foldable process as shown with dashed line in Figure 4A can be achieved. The foldable shopping basket rack can be made to have a longer length from front to rear along a longitudinal direction in Figure 4A, which is applicable to transportation of items having a longer length.

A preferred improvement can be further made, in which the folding shafts are transverse shafts which are respectively located at an upper end and a lower end of a rear fixing plane 40, and a movable foldable plane and the rear fixing plane 40 form a side-looking parallelogram. As shown with dashed line in Figure 4B, with such improvement, the foldable process can be achieved in a quick and simple manner.

A preferred improvement can be further made, in which the locking device is of a side-looking changeable triangular structure located between two longitudinal rows of wheels, several transverse shafts function as pivoting points, a side-looking triangular rod-structure is formed by connecting rods, and the length of one side of the triangle is changeable and can be held in locked states respectively corresponding to a folded state and an unfolded state of the shopping basket rack. As shown in Figures 1, 7, 8, and 9, a special example of a side-looking changeable triangular locking device is shown. Such structure facilitates optimizing force situation of the whole shopping basket rack, and is easy to switch between the folded state and the unfolded state, and is locked simply.

A preferred improvement can be further made, in which the shopping basket rack includes an X-shaped shopping basket rack 18 which is foldable about a connecting folding shaft 19, the supporting wheel is directly mounted at a front lower end, that is, a front lower limb, and the driving wheel 2 is located at the rear. As shown in Figures 5, 7, 8 and 12, two foldable frames of the X-shaped shopping basket rack are each substantially in a rectangular shape to achieve a maximum and most useful shopping basket rack capacity, which is one of the structures fully optimized in force structure, folded dimension, riding stability, storing convenience and the like.

A preferred improvement can be further made, in which the shopping basket rack is a cantilever basket rack, the shopping basket rack includes a rear fixing plane 40, a lower end of the fixing plane 40 is provided with a wheel, the cantilever foldable shopping basket rack is longitudinally folded forwards or backwards by means of a folding shaft, the steering device includes a vertical steering rod 29 located on the rear fixing plane, a longitudinal rod 8 longitudinally extends forward from the vertical steering rod 29, the other end of the longitudinal rod 8 is mounted with the driving wheel to form a longitudinal two-row wheel structure, and one of the ends of the longitudinal rod 8 is pivotally connected to the vertical steering rod 29 or a driving wheel fork via a vertical shaft sleeve. As shown in Figure 6, a steering vertical shaft sleeve pivoting structure is indicated by an arc arrow in the drawing. Such cantilever foldable structure is adapted to buy a little of items. The cantilever basket rack can be embodied in many ways. For example, in a first way, the shopping basket rack is formed by side-by-side vertical folding shafts cooperating with a left foldable movable plane and a right foldable movable plane. In a second way, the shopping basket rack is formed by a transverse upper folding shaft or a lower folding shaft respectively cooperating with an upper foldable movable plane and a lower foldable movable plane. In a third way, the shopping basket rack is formed by translating a foldable plane forwards and backwards. In a forth way, the shopping basket rack is formed as an X-shaped foldable shopping basket rack. In the aforementioned paragraphs in the specification, the similar foldable structure has been described in detail.

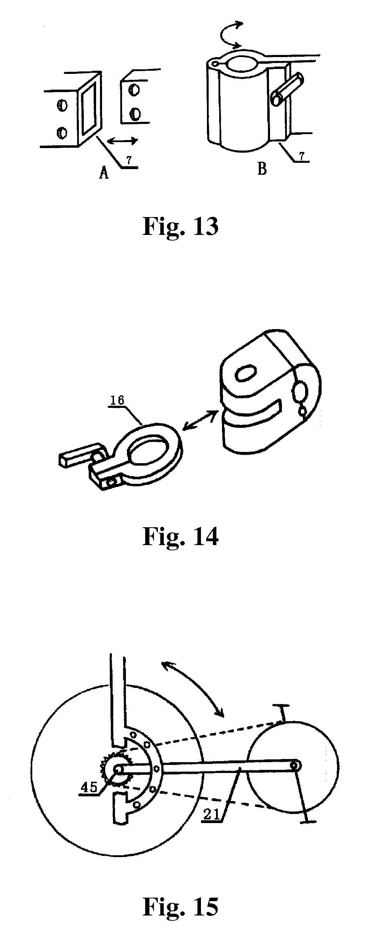

A preferred improvement can be further made, in which the longitudinal rod 8 and the vertical steering rod 29 are connected via a quick assembling/disassembling structure 7, and the supporting wheels are symmetrically arranged. With such structure, the disassembled shopping basket rack can be dragged with one row of wheels in a slight inclined manner in the shopping mall, which is particularly adapted to buy a few items for the aged, the weak and the women, without effecting on riding on the road at a normal speed after reassembling. The quick assembling/disassembling structure 7 can be formed in a most convenient and reliable way by thread engagement of a short-threaded tube, or a spigot and socket joint and a retaining pin as shown in Figure 13A, or by using a hinge hoop to be directly connected to the vertical steering rod 29 as shown in Figure 13B.

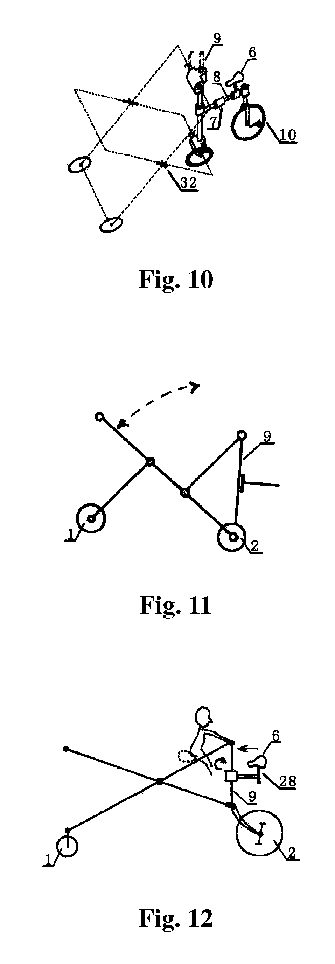

A preferred improvement can be further made, in which the supporting wheel is provided at a front lower end of the cantilever to form a longitudinal three-row wheel structure, and the longitudinal rod is connected to the vertical steering rod via the quick assembling/disassembling structure 7. As shown in Figure 10, such structure can be used with a large shopping basket rack, and a part of the cart body can be disassembled and be left outside the shopping mall when shopping, so that the shopping basket rack part can be flexibly pushed in the shopping area.

A preferred improvement can be further made, in which the steering device is located on the supporting wheel. As shown in Figures 1 and 5, such improvement makes the steering flexible.

A preferred improvement can be further made, in which the vertical wheel fork of the supporting wheel is pivotally connected to the front lower end of the foldable shopping basket rack via a vertical shaft sleeve, and the vertical wheel fork is provided with a transverse steering handle 24 which is controlled to swing by cable manipulation. As shown in Figure 1, in a simplest way, left and right steering is achieved by griping a single-hand bidirectional diverter 31 with a single hand and tightening or loosening a steering control cable 25, the structural principle of which is more clearly illustrated in a partial detailed view at the bottom left of Figure 1. Such improvement makes the steering device simple in structure, easy to operate and inexpensive.

A preferred improvement can be further made, in which the steering device includes a vertical steering rod 29 which is vertically provided on the rear fixing plane, the driving wheel 2 is connected to the vertical steering rod 29, and one of the connections between the vertical steering rod 29 and the rear fixing plane 40 and between the vertical steering rod 29 and the driving wheel 2 is a pivotable connecting structure including the vertical shaft sleeve. As shown in the detailed view of Figure 2B, an example of the above structure is shown. With such improvement, the pivotable connecting structure of the vertical shaft sleeve provides the function of steering, which is convenient and has a low manufacturing cost.

A preferred improvement can be further made, in which a longitudinal rod 8 extends forward from the vertical steering rod, and one end of the longitudinal rod 8 is provided with a third row of the supporting wheel 11 so as to form a longitudinal three-row wheel structure. As shown in Figure 3B by the dashed line, one of embodiments of the above structure is shown. With such three-row wheel structure, stability of the whole cart is greatly enhanced, so that cargo capacity of the shopping basket rack is increased.

A preferred improvement can be further made, in which the longitudinal rod 8 and the vertical steering rod 29 are connected via a quick assembling/disassembling structure 7. As shown in Figure 3B, for such improvement, the foldable shopping cart is disassembled, and the shopping basket rack part is separately pushed into the shopping area so as to improve pushing flexibility.

A preferred improvement can be further made, in which the driving wheel 2 is directly mounted on the rear lower end of the X-shaped shopping basket rack, that is, a rear lower limb. As shown in Figure 5, such improvement achieves optimized performances, for example, pushing stability, riding stability, foldable convenience and the like. The driving wheel also can be mounted on a longitudinal extending rod of the rear lower limb of a foldable rectangular frame. The rectangular frame is modified as a racquet-shaped foldable frame 20. If the two driving wheels are symmetrically arranged, a IO shaped structure is formed.

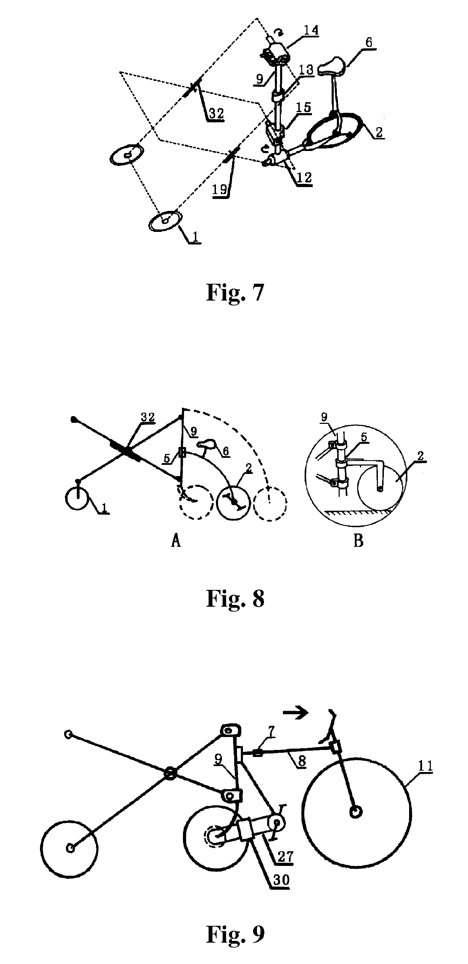

A preferred improvement can be further made, in which the driving wheel 2 is mounted on a vertical locking rod 9, a rear upper limb and a rear lower limb of the X-shaped shopping basket are pivotally connected to the vertical locking rod 9 via transverse shaft sleeves, respectively. As shown in Figures 7 and 8, with such improvement, the distance between the upper transverse shaft sleeve and the lower transverse shaft sleeve are easily controlled; the unfolded state of the shopping basket rack can be locked; and the shopping basket rack can travel stably and can be easily folded. The connecting point between the driving wheel 2 and the vertical locking rod 9 can be located above the transverse shaft sleeve or blow the transverse shaft sleeve, as shown in Figure 8A by dashed line; or can be located between the two transverse shaft sleeves, as shown in Figure 8B, so as to achieve various optimized force structure.

A preferred improvement can be further made, in which the rear upper and lower limbs 22 of the X-shaped shopping basket are pivotally connected to the vertical locking rod 9 via transverse shaft sleeves, respectively. As shown in Figure 1, with such improvement, the unfolded state of the basket rack is locked by tightening the distance between the upper transverse shaft sleeve and the lower transverse shaft sleeve, and then the basket rack is held in a simple unfolding locking state.

A preferred improvement can be further made, in which the steering device includes a longitudinal rod 8 which extends forward from the vertical locking rod 9, and the other end of the longitudinal rod 8 is provided with a third supporting wheel 11, such that a longitudinal three-row wheel structure is formed, and one of the ends of the longitudinal rod 8 is pivotally connected to the vertical locking rod or a third wheel fork via a vertical shaft sleeve. As shown in Figure 9, a more stable three-row wheel structure is provided, and a steering function is provided by pivot connection via the vertical shaft sleeve. Such structure is one of the structures that are convenient in riding and stable and have a large cargo capacity, since it is similar to a traditional tricycle when it is completely unfolded.

A preferred improvement can be further made, in which the longitudinal rod 8 is connected to the vertical locking rod 9 via a quick assembling/disassembling structure 7. As shown in Figure 9, with such improvement, in shopping, a head of the cart remains outside and reduces the occupied space of the cart, and moving flexibility of the shopping basket rack in the shopping area is improved.

A preferred improvement can be further made, in which the middle driving wheel 2 is exchanged with the third wheel, such that one end of the longitudinal rod is provided with the third row of driving wheels 10, and the middle wheel serves as the supporting wheel. As shown in Figures 1 and 10, such structure is beneficial to the optimization of the driving part. When the driving wheel is located on the end, the driving part has a greater free space, and such structure can be made more precise, more complex and larger as compared with the driving wheel located at the middle.

A preferred improvement can be further made, in which the transverse shaft sleeves located on ends of the vertical locking rod 9 can transversely slide along rails of the rear upper and lower limbs 22 of the X-shaped shopping basket, respectively. With such improvement, the length of the whole cart can be reduced by being continuously folded twice. Specifically, as shown by an arrow 41 in Figure 1, the first folding refers to the folding of the X-shaped shopping basket rack, and the second folding refers to the folding around the vertical locking rod.

A preferred improvement can be further made, in which the length of the front upper limb of the X-shaped shopping basket rack is set to be zero. Such structure is generally adapted for modification of a baby carriage.

A preferred improvement can be further made, in which a folding shaft of the X-shaped shopping basket rack 18 is provided with two shaft holes which are respectively arranged above and below a middle point of one of longer foldable frames, and other two shorter foldable frames are crosswise pivotally connected to the longer foldable frame via the folding shafts at the ends thereof, respectively. As shown in Figure 11, generally, the shorter foldable frame is in an open rectangular shape. This structure is a variation of the X-shaped foldable shopping basket rack, and the longitudinal length of this structure is increased after it is unfolded. Thus, the shopping basket rack has a greater length, which is adapted for the modification of a large baby carriage in which a baby can lie.

A preferred improvement can be further made, in which the connecting folding shafts 19 of the X-shaped shopping basket rack 18 are two parallel shafts, which are respectively pivotally connected to two foldable frames and are connected to each other via a short rod. Such improvement is adapted to improve the force structure of the foldable shopping basket rack.

A preferred improvement can be further made, in which one end of the folding shaft 19 of the X-shaped shopping basket rack 18 is mounted on a spring buffering structure 32 which is placed in parallel on the foldable frame. As shown in Figures 7 and 8A, with such improvement, the buffering performance of the shopping basket rack is effectively improved, and such improvement is applicable to a rugged road.

A preferred improvement can be further made, in which the transverse shaft sleeve is provided with a vertical shaft sleeve movably connected to the vertical locking rod 9 so as to from a cross shaft sleeve 15. As shown in Figures 1, 7 and 10, with such improvement, one component can have multiple functions, such as cart steering function, a function of sliding of the shaft sleeve along the vertical locking rod 19 during folding of the X-shaped shopping basket rack, and thus assembling stability and production efficiency of the cart can be improved.

A preferred improvement can be further made, in which the transverse shaft sleeve is a hinge hoop 14 which is pivotally connected to rails 22 of the upper and lower limbs on one side of the X-shaped shopping basket rack 18 in such a way that the hinge hoop can be opened and closed. As shown in Figure 7, with such improvement, during folding the X-shaped shopping basket rack, the hinge hoop 14 is opened so that the hinge hoop 14 is disengaged from the rail 22, which is applicable to a significant variation of the distance between the rails 22 of the rear upper and lower limbs.

A preferred improvement can be further made, in which the vertical locking rod 9 includes an upper segment and a lower segment which are connected via a quick-assembling/disassembling engagement structure 13. As shown in Figure 7, the problem that the distance between the rails 22 of the rear upper and lower limbs is significantly changed during folding of the X-shaped shopping basket rack 18 can be solved. Generally, a short-threaded tube is used as the quick-assembling/disassembling engagement structure 13, and a spigot and socket joint and retaining pin also can be used as the quick-assembling/disassembling engagement structure 13, as shown in Figure 13A.

A preferred improvement can be further made, in which the vertical locking rod 9 is a retractable rod. As shown in Figure 1, an outer retractable sleeve 23 is provided, so as to similarly solve the problem that the distance between the rails 22 of the rear upper and lower limbs of the X-shaped shopping basket rack is significantly changed during folding.

A preferred improvement can be further made, in which a riding seat 6 is directly mounted on the vertical locking rod 9. The riding seat 6 can be connected to the vertical locking 9 via a seat rod as a mediation rod, or with no seat rod. With such improvement, the weight of the rider can be directly transmitted to the rear driving wheel 2, and the force applied to the X-shaped shopping basket rack can be reduced.

A preferred improvement can be further made, in which the riding seat 6 is directly mounted on an extending rod of the rear upper limb of the X-shaped foldable shopping basket rack 18. Still, with such structure, the weight of the rider can be transmitted to the rear driving wheel 2 via a vertical locking rod 9, and the force applied to the X-shaped shopping basket rack 18 can be reduced.

A preferred improvement can be further made, in which the vertical locking rod 9 is slidable with respect to the cross shaft sleeve 15, the vertical locking rod 9 includes two parts for achieving a foldable connection, and the length of one part is equal to the distance between the rails 22 of the upper limb and the lower limb when the X-shaped shopping basket rack is unfolded. Thus, the speed of foldable of the X-shaped shopping basket rack may be quickly folded by sliding fit, and when the X-shaped shopping basket rack is unfolded, the vertical locking rod is folded down to prevent the upwardly protruded vertical locking rod from blocking vision of a rider, as shown in Figure 10.

A preferred improvement can be further made, in which the steering device includes a vertical shaft sleeve 5, via which the vertical locking rod 9 is connected to the driving wheel 2. The vertical shaft sleeve 5 in Figures 8A and 8B has the function of steering, simplifies the steering device and reduces the manufacturing cost.

A preferred improvement can be further made, in which the driving wheel 2 is provided with a longitudinally retractable structure 12, the driving wheel fork is connected to a longitudinal guiding rod, the vertical locking rod 9 is provided with a guiding hole for mounting the longitudinal guiding rod, and the guiding rod is longitudinally slidable with respect to the guiding hole. As shown in Figure 7, with such improvement, the whole cart is adjustable in length. Thus, moving flexibility of the cart in the shopping mall is significantly improved, and such structure is one of the most useful structures of the application.

A preferred improvement can be further made, in which the foldable shopping cart has a riding seat position changeable structure. Such improvement is done for the purpose of adjusting the center of gravity between the empty cart and the full-load cart so as to improve driving stability both in empty cart-out condition and in full-load cart return condition.

A preferred improvement can be further made, in which the riding seat 6 is mounted on the vertical locking rod 9, and the position of the riding seat 6 is switched between two front and rear positions that are symmetrical about the vertical locking rod 9. As shown in Figure 12, the center of gravity of the whole cart is adjusted to a largest extent by such seat reversing structure 28. The rider can ride in the shopping basket rack if the cart is empty, while the rider can rid outside the shopping basket rack if the cart is full. In this way, the center of gravity of the whole cart is greatly adjusted. The symmetrical position can be achieved in two ways. In one way, the shaft sleeve pivotally connected with the vertical locking rod 9 is rotated by 180 degrees so as to symmetrically switch the position of the seat, as shown by an arc arrow in Figure 12. In the other way, the longitudinal guiding rod of the seat is cooperated with a longitudinal guiding hole in the vertical locking rod 9, as shown by a transverse arrow in Figure 12, so that the seat can be symmetrically switched between the forward position and the reverse position.

A preferred improvement can be further made, in which the driving structure is a separated pedal driving structure 27, and a driving part of the pedal is mounted on a side of the longitudinal rod 8. As shown in Figure 9, with such improvement, the distribution of the driving structure can be optimized, and the pedal comfort of the rider can be enhanced.

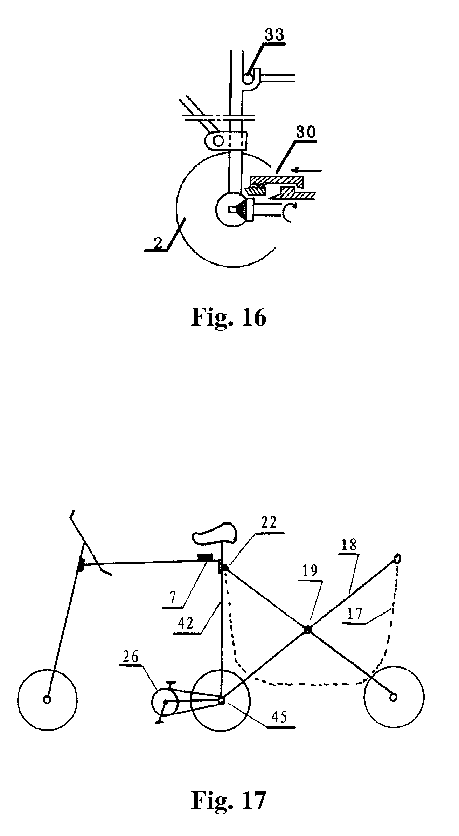

A preferred improvement can be further made, in which the upper portion of the quick disassembling/assembling structure is an open shaft seat 33, the lower portion of the quick disassembling/assembling structure is an aligning tube short-threaded connector 30, and the separated driving device is driven by a bevel gear and is located in the engagement tube. As shown in Figure 16, with such improvement, the front part and the rear part can be easily assembled and aligned; the assembled structure may have a good assembled strength; and the rider may not be polluted by lubricating oil contamination.

A preferred improvement can be further made, in which the cross shaft sleeve 15 is provided with a sliding stop device between the cross shaft sleeve 15 and the vertical locking rod 9 or the rail 22 of the X-shaped shopping basket rack. With such improvement, a function for locking the unfolded state of the shopping basket rack can be achieved via the cross shaft sleeve, so that a function for locking transverse slide can also be achieved. The simplest sliding stop structure can be obtained by providing a threaded hole on the shaft sleeve, and by using a bolt to connect the shaft sleeve to a shaft or by using a frictional force caused by the pressure of a bolt for locking.

A preferred improvement can be further made, in which the sliding stop device includes a groove provided on the shaft sleeve and a clamping ring 16 received in the groove. As shown in Figure 14, with such improvement, a rod within the shaft sleeve is not damaged; the sliding can be stopped, while the inner shaft rod can be rotated with respect to the outer shaft sleeve; and the clamping ring 16 can be easily tightened or loosened.

A preferred improvement can be further made, in which the number of the driving wheel is one, and at least one row of supporting wheels are arranged symmetrically. As shown in Figures 1, 7 and 10, with such improvement, on the condition that the driving stability of the cart is ensured, the single wheel is driven more simply than the double symmetrical wheels. The volume is smaller by multiple folds. The first fold refers to the fold of the shopping basket rack, and the second fold refers to the successive fold of the rear part or the front part of the cart at the vertical locking rod 9 or the vertical steering rod 29.

A preferred improvement can be further made, in which the driving device is a pedal-driving structure of a traditional bicycle. As shown in Figures 1, 5 and 9, such improvement is the most environmental protection, and can be achieved by chain transmission or bevel gear transmission, or can be directly driven by a pedal wheel shaft, which are commonly found in a traditional bicycle, tricycle or buggy. A speed change mechanism can be incorporated into these driving structures to provide the rider with more speeds and convenience.

A preferred improvement can be further made, in which the driving device is a foldable cantilever pedal driving structure, one end of the foldable cantilever 21 is pivotally connected to a driving wheel shaft 45 via a shaft sleeve, and an angle between the foldable cantilever 21 and the cart frame next to foldable cantilever 21 is controlled by an angle control rod to achieve the folding. The optimal structure of the angle control rod is in arc shape, and the angle control rod is provided with several positioning hole, so as to be positioned via a positioning pin. As shown in Figure 15, such improvement is provided for reducing the entire length of the shopping basket rack by folding up the cantilever 21 before entering the shopping mall and increasing the moving flexibility of the shopping basket rack in the shopping mall, and such improvement can be adapted to the requirement of the rider on relaxing comfort. With the foldable cantilever pedal driving structure, the rider can appropriately stretch the body and coordinate the limbs.

A preferred improvement can be further made, in which the driving device is a hub-motor driving structure. Such improvement makes the cart most concise in appearance, since many mechanical driving and transmitting devices are omitted.

A preferred improvement can be further made, in which the driving device is an internal-combustion engine driving structure. Such improvement has the advantages of long distance transportation, and overcomes the problem that the power supplied by human or a battery cannot last for a long term.

A preferred improvement can be further made, in which the foldable shopping basket rack includes a row of supporting wheel set and is mounted at a rear part of a traditional bicycle with a quick disassembling/assembling structure, and the front part and the rear part of the traditional bicycle are connected via a quick disassembling/assembling engagement structure 7. In such improvement of a longitudinal removable three-row wheel structure, the front two rows of wheels can be used for a traditional bicycle, or the rear two rows of wheels can be used for a shopping cart which is moved by bushing, or all of the three rows of wheels can be used for riding operation of a transporting cart.

A preferred improvement can be further made, in which the foldable shopping basket rack includes the X-shaped foldable shopping basket rack 18, and the quick disassembling/assembling structure located at the rear of the bicycle is configured such that the rails 22 of the upper limb and lower limb of the rectangular foldable frames on one side of the X-shaped foldable shopping basket rack is connected to a seat rod 42 via the hinge hoop. Such improvement provides a simplest quick disassembling/assembling connecting structure. Apparently, the hinge hoop can be replaced by any other quick connecting means, and can be conveniently mounted on an existing small wheel bicycle. Such foldable shopping basket rack can be mounted on the front part of the head of the bicycle in a similar way, which has substantially the same effect.

A preferred improvement can be further made, in which the foldable shopping basket rack includes the X-shaped foldable shopping basket rack 18, the quick disassembling/assembling structure located at the rear of the bicycle is configured such that the rails 22 of the upper limb of the rectangular foldable frames on one side of the X-shaped foldable shopping basket rack 18 is connected to a seat rod 42 via the hinge hoop, the rail 22 of the lower limb of the rectangular foldable frames at the same side is cut off in the middle, two ends of the cut-off part are respectively connected to two ends of the driving wheel shaft 45 in a tube-shaft inserting manner. As shown in Figure 17, apparently, the hinge hoop can be replaced by any other similar connecting manner, and the pedal driving can be replaced by a hub-motor driving. Such improvement is one of the optimal combined structures.

The above descriptions of the disclosed embodiments enable those skilled in the art to implement or use the present disclosure. Various modifications made to those embodiments will be obvious to those skilled in the art, and the general principle defined in the present disclosure can be implemented in other embodiments without departing from the spirit or the scope of the present disclosure. Therefore, the application should not be limited to those embodiments disclosed herein, but should be in coincidence with the widest scope in accordance with the principles and the novel characteristics disclosed herein.

## Claims

1. A foldable shopping cart, comprising a riding seat, a longitudinally foldable shopping basket rack having wheels, and a steering device, wherein the shopping basket rack is capable of being switched between a folded position and an unfolded position longitudinally about a folding shaft; a locking device for locking the shopping basket rack in an unfolded state is further provided; at least two rows of wheels are arranged longitudinally, one row of which is a driving wheel provided with a driving device, and the rest row of which is a supporting wheel; and at least one row of the driving wheel and the supporting wheel is a wheel set arranged symmetrically.

2. The foldable shopping cart according to claim 1, wherein the shopping basket rack comprises a rear fixing plane, the driving wheel is provided at a lower end of the fixing plane, vertical folding shafts are respectively provided at a left side and a right side of the fixing plane, and the supporting wheel is located at the front lower end of a movable folding plane which is foldable in a right-left direction.

3. The foldable shopping cart according to claim 1, wherein the shopping basket rack comprises a rear fixing plane, the driving wheel is provided at a lower end of the fixing plane, a transverse folding shaft is located on the fixing plane, a movable folding plane is foldable in up-down direction, and the supporting wheel is provided at a front end of the movable folding plane.

4. The foldable shopping cart according to claim 1, wherein the shopping basket rack comprises a rear fixing plane, the driving wheel is provided at a lower end of the fixing plane, a movable folding plane is foldable in front-rear direction by means of a plurality of folding shafts in a translation manner, and the supporting wheel is provided at a lower end of the translated movable folding plane.

5. The foldable shopping cart according to claim 1, wherein the folding shafts are transverse shafts located at the top and the bottom of the rear fixing plane respectively, and a side-looking parallelogram is formed between a movable folding plane and the rear fixing plane.

6. The foldable shopping cart according to claim 1, wherein the locking device is of a side-looking changeable triangular structure located between two longitudinal rows of wheels, a plurality of transverse shafts function as pivoting points, and are connected via rods to form a side-looking triangular rod-structure, and the length of one side of the triangle is changeable and is held in locked states corresponding to a folded state and an unfolded state of the shopping basket rack.

7. The foldable shopping cart according to claim 1, wherein the shopping basket rack comprises an X-shaped shopping basket rack foldable about a connecting folding shaft, the supporting wheel is directly mounted on a front lower end, that is, a front lower limb, and the driving wheel is located on a rear end.

8. The foldable shopping cart according to claim 1, wherein the shopping basket rack is a cantilever basket rack, the shopping basket rack comprises a rear fixing plane, a lower end of the fixing plane is provided with a wheel, the cantilever foldable shopping basket rack is longitudinally foldable in front-rear direction by means of a folding shaft, the steering device comprises a vertical steering rod located on the rear fixing plane, a longitudinal rod longitudinally extends forward from the vertical steering rod, the other end of the longitudinal rod is mounted with the driving wheel so as to form a longitudinal two-row wheel structure, and one of the ends of the longitudinal rod is pivotally connected to the vertical steering rod or a driving wheel fork via a vertical shaft sleeve.

9. The foldable shopping cart according to claim 8, wherein the longitudinal rod and the vertical steering rod are connected via a quick assembling/disassembling structure, and the supporting wheels are symmetrically arranged in left-right direction.

10. The foldable shopping cart according to claim 8, wherein the supporting wheel is provided at a front lower end of the cantilever so as to form a longitudinal three-row wheel structure, and the longitudinal rod and the vertical steering rod are connected via a quick assembling/disassembling structure.

11. The foldable shopping cart according to any one of claims 1 to 7, wherein the steering device is located on the supporting wheel.

12. The foldable shopping cart according to claim 11, wherein the vertical wheel fork of the supporting wheel is pivotally connected to the front lower end of the foldable shopping basket rack via a vertical shaft sleeve, and the vertical wheel fork is provided with a transverse steering handle controlled to swing in left-right direction by cable manipulation.

13. The foldable shopping cart according to any one of claims 2 to 5, wherein the steering device comprises a vertical steering rod vertically provided on the rear fixing plane, the driving wheel is connected to the vertical steering rod, and one of the connections between the vertical steering rod and the rear fixing plane and between the vertical steering rod and the driving wheel is a pivotable connecting structure comprising the vertical shaft sleeve.

14. The foldable shopping cart according to claim 13, wherein a longitudinal rod extends forward from the vertical steering rod, and one end of the longitudinal rod is provided with the supporting wheel so as to form a longitudinal three-row wheel structure.

15. The foldable shopping cart according to claim 14, wherein the longitudinal rod and the vertical steering rod are connected via a quick assembling/disassembling structure.

16. The foldable shopping cart according to claim 7, wherein the driving wheel is directly mounted on the rear lower end of the X-shaped shopping basket rack, that is, a rear lower limb.

17. The foldable shopping cart according to claim 7, wherein the driving wheel is mounted on a vertical locking rod, a rear upper limb and a rear lower limb of the X-shaped shopping basket rack are pivotally connected to the vertical locking rod via a transverse shaft sleeve.

18. The foldable shopping cart according to claim 16, wherein the rear upper and lower limbs of the X-shaped shopping basket rack are pivotally connected to the vertical locking rod via a transverse shaft sleeve.

19. The foldable shopping cart according to claim 17 or 18, wherein the steering device comprises a longitudinal rod extending forward from the vertical locking rod, and the other end of the longitudinal rod is provided with a third supporting wheel, such that a longitudinal three-row wheel structure is formed, and one of the ends of the longitudinal rod is pivotally connected to the vertical locking rod or a third wheel fork via a vertical shaft sleeve.

20. The foldable shopping cart according to claim 19, wherein the longitudinal rod is connected to the vertical locking rod via a quick assembling/disassembling structure.

21. The foldable shopping cart according to claim 19, wherein the middle driving wheel is exchanged with the third wheel, such that one end of the longitudinal rod is provided with the third row of driving wheels, and the middle wheel is changed to serve as the supporting wheel.

22. The foldable shopping cart according to claim 19, wherein transverse shaft sleeves located on ends of the vertical locking rod are transversely slidable along rails of the rear upper and lower limbs of the X-shaped shopping basket rack, respectively.

23. The foldable shopping cart according to claim 7, wherein the length of the front upper limb of the X-shaped shopping basket rack is set to be zero.

24. The foldable shopping cart according to claim 7, wherein a folding shaft of the X-shaped shopping basket rack is provided with two shaft holes respectively arranged above and below a middle point of one of longer foldable frames, and other two shorter foldable frames are crosswise pivotally connected to the longer foldable frame via the folding shafts at the ends thereof, respectively.

25. The foldable shopping cart according to claim 7, wherein the connecting folding shafts of the X-shaped shopping basket rack are two parallel shafts respectively pivotally connected to two foldable frames and connected to each other via a short rod.

26. The foldable shopping cart according to claim 7, wherein one end of the folding shaft of the X-shaped shopping basket rack is mounted on a spring buffering structure placed in parallel on the foldable frame.

27. The foldable shopping cart according to claim 17 or 18, wherein a vertical shaft sleeve movably connected to the vertical locking rod is provided on the transverse shaft sleeve so as to form a cross shaft sleeve.

28. The foldable shopping cart according to claim 17 or 18, wherein the transverse shaft sleeve is a hinge hoop pivotally connected to rails of the upper and lower limbs on one side of the X-shaped shopping basket rack in such a way that the hinge hoop is capable of being opened and closed.

29. The foldable shopping cart according to claim 17 or 18, wherein the vertical locking rod comprises an upper segment and a lower segment which are connected via a quick assembling/disassembling engagement structure.

30. The foldable shopping cart according to claim 17 or 18, wherein the vertical locking rod is a retractable rod.

31. The foldable shopping cart according to claim 17 or 18, wherein the riding seat is directly mounted on the vertical locking rod.

32. The foldable shopping cart according to claim 17 or 18, wherein the riding seat is directly mounted on an extending rod of the rear upper limb of the X-shaped shopping basket rack.

33. The foldable shopping cart according to claim 27, wherein the vertical locking rod is slidable with respect to the cross shaft sleeve, the vertical locking rod includes two parts for achieving a foldable connection, and the length of one of the two parts is equal to the distance between the rails of the upper limb and the lower limb at the same side when the X-shaped shopping basket rack is unfolded.

34. The foldable shopping cart according to claim 17, wherein the steering device comprises a vertical shaft sleeve, and the vertical locking rod is connected to the driving wheel via the vertical shaft sleeve.

35. The foldable shopping cart according to claim 17, wherein the driving wheel is provided with a longitudinally retractable structure, the driving wheel fork is connected to a longitudinal guiding rod, the vertical locking rod is provided with a guiding hole for mounting the longitudinal guiding rod, and the guiding rod is longitudinally slidable with respect to the guiding hole.

36. The foldable shopping cart according to claim 17 or 18, wherein the foldable shopping cart is provided with a riding seat position changeable structure.

37. The foldable shopping cart according to claim 36, wherein the riding seat is mounted on the vertical locking rod, and the riding seat is capable of being switched around the vertical locking rod between front and rear symmetrical positions.

38. The foldable shopping cart according to claim 20, wherein the driving structure is a separated pedal driving structure, and a driving part of a pedal is mounted at a side of the longitudinal rod.

39. The foldable shopping cart according to claim 38, wherein an upper portion of the quick disassembling/assembling structure is an open shaft seat, a lower portion of the quick disassembling/assembling structure is an aligning tube short-threaded connector, and the separated driving device is driven by a bevel gear and is located in an engagement tube.

40. The foldable shopping cart according to claim 27, wherein the cross shaft sleeve is provided with a sliding stop device provided between the cross shaft sleeve and the vertical locking rod or the rail of the X-shaped shopping basket rack.

41. The foldable shopping cart according to claim 40, wherein the sliding stop device includes a groove provided in the shaft sleeve and a clamping ring capable of being inserted in the groove.

42. The foldable shopping cart according to any one of claims 1-10, 16-18, 23- 26, 34 and 35, wherein the number of the driving wheel is one, and at least one row of supporting wheels are arranged symmetrically in left-right direction

43. The foldable shopping cart according to any one of claims 1-10, 16-18, 23- 26, 34 and 35, wherein the driving device is a pedal-driving structure of a traditional bicycle.

44. The foldable shopping cart according to claim 43, wherein the driving device is a foldable cantilever pedal driving structure, one end of a foldable cantilever is pivotally connected to a driving wheel shaft via a shaft sleeve, and an angle between the foldable cantilever and a cart frame next to the foldable cantilever is controlled by an angle control rod so as to achieve the folding.

45. The foldable shopping cart according to any one of claims 1-10, 16-18, 23- 26, 34 and 35, wherein the driving device is a hub-motor driving structure.

46. The foldable shopping cart according to any one of claims 1-10, 16-18, 23- 26, 34 and 35, wherein the driving device is an internal-combustion engine driving structure.

47. The foldable shopping cart according to claim 1, wherein the foldable shopping basket rack comprises a row of supporting wheel set, and is mounted at a rear part of a traditional bicycle via a quick disassembling/assembling structure, and the front part and the rear part of the traditional bicycle are connected via a quick disassembling/assembling engagement structure.

48. The foldable shopping cart according to claim 47, wherein the foldable shopping basket rack comprises the X-shaped foldable shopping basket rack, and the quick disassembling/assembling structure located at the rear of the bicycle is configured such that the rails of the upper limb and the lower limb of the rectangular foldable frames on one side of the X-shaped foldable shopping basket rack are connected to a seat rod via the hinge hoop.

49. The foldable shopping cart according to claim 47, wherein the foldable shopping basket rack comprises the X-shaped foldable shopping basket rack, the quick disassembling/assembling structure located at the rear of the bicycle is configured such that the rails of the upper limb and the lower limb of the rectangular foldable frames on one side of the X-shaped foldable shopping basket rack are connected to a seat rod via the hinge hoop, the rail of the lower limb of the rectangular foldable frame at the same side is cut off in the middle, two ends of a cut-off part are respectively connected to two ends of the driving wheel shaft in a tube-shaft inserting manner.
